# EUROPÄISCHE PATENTSCHRIFT

(11) **EP 0 884 827 B1**
(45) Veröffentlichungstag und Bekanntmachung des Hinweises auf die Patenterteilung: **01.06.2005**
(21) Anmeldenummer: 98103757.5
(22) Anmeldetag: 04.03.1998
(51) Int. Cl.: H02K 7/116, H02K 11/00, H02K 5/22

(54) **Verstellantrieb, insbesondere für ein Schiebedach eines Kraftfahrzeugs**
Actuator, particularly for sliding roof of a motor vehicle
Actionneur, en particulier pour toit coulissant de véhicule automobile

(30) Priorität: 09.06.1997 DE 19724009
(43) Veröffentlichungstag der Anmeldung: 16.12.1998
(73) Patentinhaber: ROBERT BOSCH GMBH, 70442 Stuttgart (DE)
(72) Erfinder: Steuer, Peter, 76149 Karlsruhe (DE); Bäuerle, Christian, 76547 Sinzheim (DE); Presser, Lothar, 38228 Salzgitter (DE); Schwiebert, Roman, 38229 Salzgitter (DE)

(56) Entgegenhaltungen:
- EP-A- 0 542 667
- DE-A- 4 238 375
- US-A- 5 245 258

## Beschreibung

### Stand der Technik

Die Erfindung geht aus von einem Verstellantrieb, insbesondere für ein Schiebedach eines Kraftfahrzeugs nach dem Oberbegriff des Anspruchs 1. Die DE-A1-4238375 offenbart einen derartigen Verstellantriebe. Es ist ebenfalls ein Verstellantrieb bekannt (DE-PS 43 23 946), der einen Elektromotor besitzt, um über ein Untersetzungsgetriebe ein Antriebsritzel anzutreiben, das über einen Stellmechanismus ein Schiebedach eines Kraftfahrzeugs bewegt. Das Untersetzungsgetriebe ist in einem Getriebegehäuseteil untergebracht, das an dem Elektromotor angeflanscht ist. Zur Steuerung des Elektromotors ist eine Schaltungsanordnung vorgesehen, deren Schaltungskomponenten auf einer Platine aufgebracht sind. Die Platine ist ihrerseits in einem Elektrogehäuseteil untergebracht, das steckbar am Getriebegehäuseteil angebracht ist. Um die Bewegung des Schiebedaches über den Stellmechanismus mittels des Verstellantriebs entsprechend steuern zu können, ist eine Positionserfassungseinrichtung am Elektromotor erforderlich, welche die Drehbewegungen einer Antriebswelle des Elektromotors erfaßt, um daraus eine Zuordnung zur aktuellen Position des Schiebedaches zu erhalten. Im angegebenen Stand der Technik wird hierzu ein Positions-Sollwertgeber in Form eines Potentiometers verwendet. Das Potentiometer ist dabei in einem separaten Gehäuse untergebracht.

Aus der DE-OS 34 33 060 ist bekannt, zur Positionserfassung einen sogenannten Hall-Sensor zu verwenden, der von einem mehrpolig magnetisierten Permanentmagnetring an einer Antriebswelle des Elektromotors entsprechend betätigt wird. Der Hall-Sensor ist dabei ebenfalls in einem separaten Gehäuse untergebracht. Bei der Montage des separaten Gehäuses ist es erforderlich, die Einbaulage des Hall-Sensors genau zu prüfen.

Das Vorsehen separater Gehäuse ist aufwendig, wodurch sich die Produktionskosten erhöhen.

### Vorteile der Erfindung

Der erfindungsgemäße Verstellantrieb mit den kennzeichnenden Merkmalen des Anspruchs 1 hat demgegenüber den Vorteil eines einfacheren Aufbaus, wobei sich in einfacher Art und Weise ein Hall-Sensor in exakter Zuordnung zu einem Permanentmagnetring anordnen läßt. Besonders vorteilhaft ist dabei, daß sich eine wesentlich vereinfachte Montage und geringerer Prüfaufwand der Verstelleinrichtung ergibt, wodurch sich die Herstellungskosten weiter reduzieren lassen.

Durch die in den Unteransprüchen aufgeführten Maßnahmen sind vorteilhafte Weiterbildungen und Verbesserungen des im Anspruch 1 angegebenen Verstellantriebs möglich.

Vorteilhaft ist des weiteren, daß Anschlußbeinchen des Hall-Sensors durch vorgesehene Einführschrägen im Bauteilhalter beim Einfügen in eine Ausnehmung des Bauteilhalters selbständig zu Öffnungen in der Platine geführt werden, wodurch ein ansonsten erforderliches Vorbiegen der Anschlußbeinchen des Hall-Sensors entfallen kann. Vorteilhaft ist ferner, daß durch den Bauteilhalter eine einfache Vormontage möglich ist, da dieser mittels vorgesehener Rasthaken während des Fertigungsprozesses an der Platine befestigt werden kann.

### Zeichnung

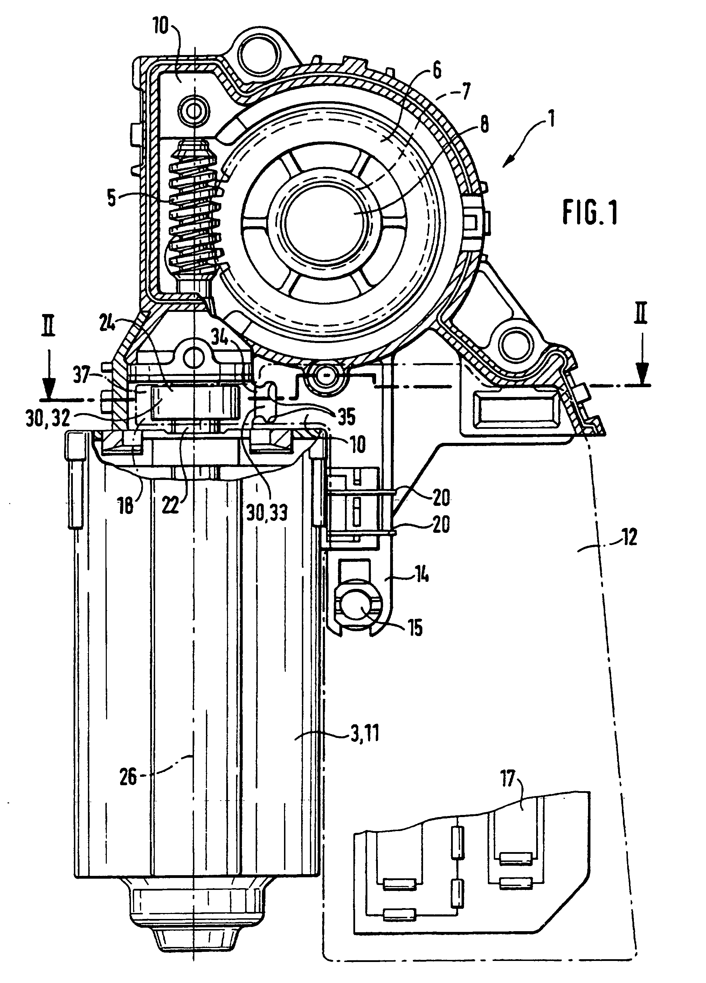

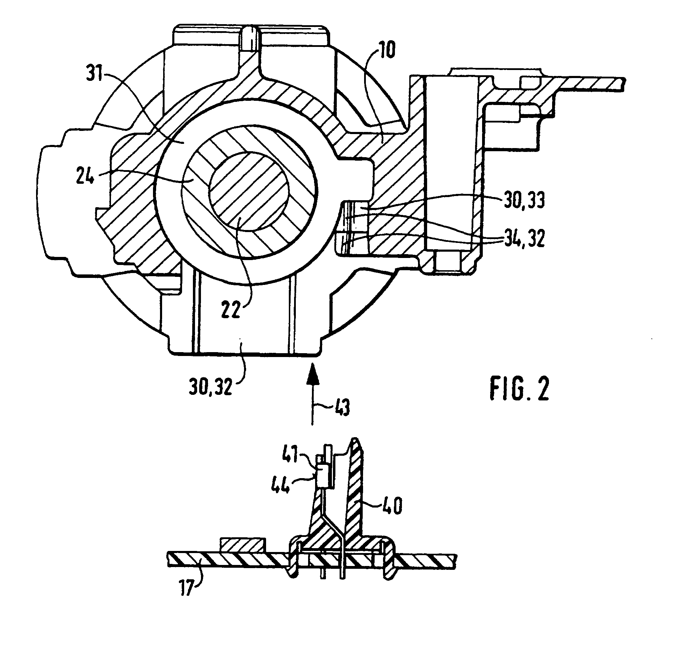

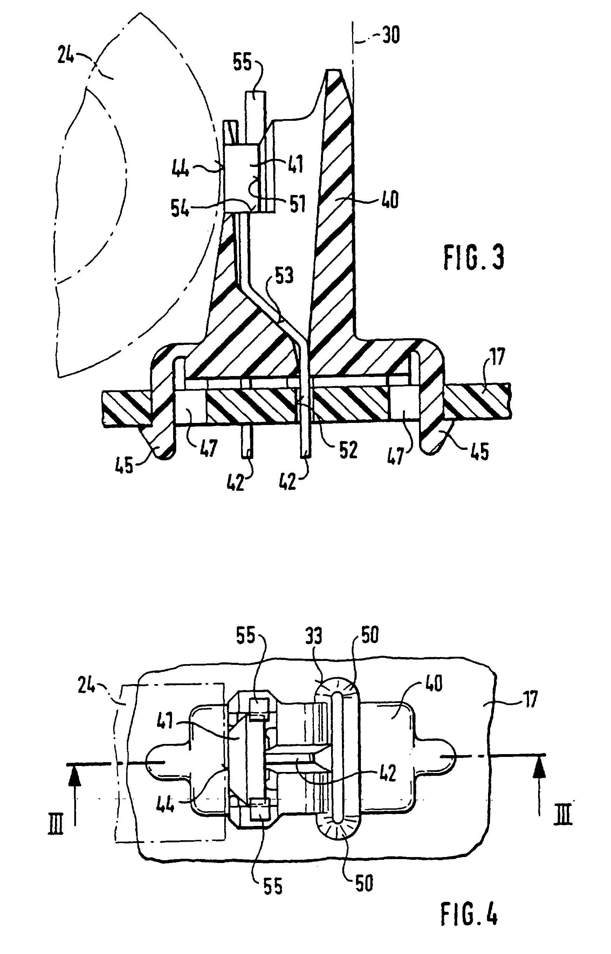

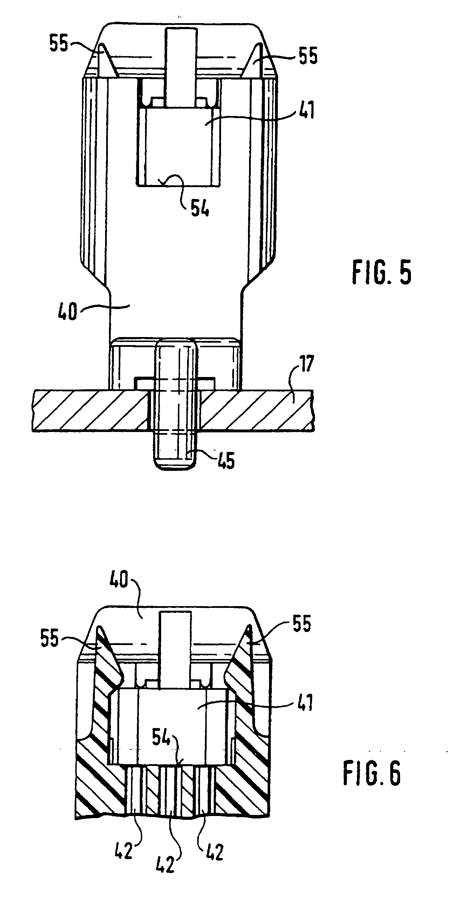

Ein Ausführungsbeispiel der Erfindung ist in der Zeichnung vereinfacht dargestellt und in der nachfolgenden Beschreibung näher erläutert. Es zeigen Figur 1 eine Draufsicht eines Verstellantriebs mit strichpunktiert angedeutetem Elektrogehäuse, Figur 2 einen Schnitt entlang einer Linie II-II in Figur 1, wobei eine Schaltungsanordnung eines Elektromotors mit einem Bauteilhalter und Hall-Sensor unmittelbar vor der Montage dargestellt ist, Figur 3 eine Schnittdarstellung des Bauteilhalters aus Figur 2 in geändertem Maßstab, Figur 4 eine Draufsicht auf den Bauteilhalter mit Hall-Sensor, Figur 5 eine Seitenansicht des Bauteilhalters mit Hall-Sensor, Figur 6 eine Schnittdarstellung des Bauteilhalters mit Hall-Sensor nach Figur 5.

### Beschreibung des Ausführungsbeispiels

In Figur 1 ist ein Verstellantrieb 1 dargestellt, der insbesondere für ein Schiebedach eines Kraftfahrzeugs vorgesehen ist. Mittels des Verstellantriebs 1 wird über einen nicht näher dargestellten Stellmechanismus ein Deckel verschoben, der in einer Schließstellung eine Dachöffnung eines Kraftfahrzeugs schließen und in einer Offenstellung öffnen kann. Der Verstellantrieb 1 besitzt hierzu einen Elektromotor 3, der über ein Untersetzungsgetriebe, das vorzugsweise aus einer Schneckenwelle 5 und einem mit der Schneckenwelle 5 kämmenden Schneckenrad 6 besteht, ein Antriebsritzel 7 betätigt. Das Schneckenrad 6 steht hierzu in drehfester Verbindung mit dem an einer Welle 8 angebrachten, in Figur 1 gestrichelt eingezeichneten Antriebsritzel 7, das seinerseits über einen nicht näher dargestellten Stellmechanismus ein nicht näher dargestelltes Schiebedach eines Kraftfahrzeugs öffnen oder schließen kann. Das Untersetzungsgetriebe 5, 6 ist in einem Getriebegehäuse 10 untergebracht, das vorzugsweise als Metalldruckgußteil ausgebildet ist. Das Getriebegehäuse 10 ist an einem Motorgehäuse 11 des Elektromotors 3 angeflanscht. Das Getriebegehäuse 10 verfügt über einen länglichen Fortsatz 14, der eine Öffnung 15 aufweist. Die Öffnung 15 dient zur lösbaren Befestigung eines in Figur 1 strichpunktiert angedeuteten Elektrogehäuses 12. Das Elektrogehäuse 12 ist vorzugsweise als Kunststoffteil ausgebildet und dient zur Aufnahme einer Schaltungsanordnung 17, die aus einer Platine mit Leiterbahnen und mehreren elektrischen Bauteilen besteht. Die Schaltungsanordnung 17 ist zum Beispiel über eine Rastverbindung lösbar in dem Elektrogehäuse 12 untergebracht. Das Motorgehäuse 11 hat eine zylindrische Form und besitzt zur elektrischen Kontaktierung des Elektromotors 3 seitlich etwa rechtwinklig abstehende Kontaktfahnen 20.

Der Elektromotor 3 besitzt eine Antriebswelle 22, die endseitig in die Schneckenwelle 5 übergeht. Im Getriebegehäuse 10 ist an der Antriebswelle 22 ein Magnetring 24 drehfest angebracht, der zum Beispiel an seinem Umfang verteilt vorzugsweise mehrpolig permanentmagnetisierte Bereiche aufweist. Seitlich des Magnetringes 24, beispielsweise senkrecht zu einer Längsachse 26 der Antriebswelle 22 beziehungsweise des Elektromotors 3, ist im Getriebegehäuse 10 eine Ausnehmung 30 ausgenommen, die einen den Magnetring 24 umgebenden Aufnahmeraum 31 schneidet. Die Ausnehmung 30 weist hierzu einen im wesentlichen rechteckförmigen Bereich 32 auf, der weite Teile des Aufnahmeraumes 31 freigibt. Senkrecht zu dem Bereich 32 begrenzen den Aufnahmeraum 31 seitlich zwei Stege 34. An die Stege 34 schließt sich zu dem Bereich 32 hin offen ein querschnittskleinerer Führungsbereich 33 der Ausnehmung 30 an, der zwei gegenüberliegende halbkreisförmige Rundungen 35 aufweist. Wie in Figur 1 dargestellt ist, überdeckt im montierten Zustand des Elektrogehäuses 12 ein Fortsatz 18 der Schaltungsanordnung 17 beide Bereiche 32, 33 der Ausnehmung 30.

Wie in Figur 2, einer Schnittdarstellung entlang einer Linie II-II in Figur 1, näher dargestellt ist, dient der die Rundungen 35 enthaltende Bereich 33 zur Aufnahme und zur Führung eines Bauteilhalters 40, der seinerseits zur Halterung eines elektrischen Bauteils der Schaltungsanordnung 17, insbesondere eines Hall-Sensors 41, vorgesehen ist. Die Montagerichtung der Schaltungsanordnung 17 ist in Figur 2 durch einen Pfeil 43 angedeutet. Wie in Figur 3, einem Ausschnitt aus Figur 2 in geändertem Maßstab näher zu entnehmen ist, liegt der Hall-Sensor 41 in fertig montiertem Zustand des Bauteilhalters 40 in der Ausnehmung 30 beziehungsweise im Bereich 33 so ein, daß der Hall-Sensor 41 mit seiner Seitenfläche 44 nur einen geringen Spalt zu dem in Figur 3 gestrichelt angedeuteten Magnetring 24 aufweist. Der Bauteilhalter 40 ist vorzugsweise aus Kunststoff hergestellt und verfügt über zwei Rasthaken 45, die in vorgesehene Platinenöffnungen 47 verrasten können, um so den Bauteilhalter 40 an der Schaltungsanordnung 17 zum Beispiel bei der Vormontage zu befestigen. Wie in Figur 4, einer Draufsicht auf den Bauteilhalter 40 näher dargestellt ist, hat der Bauteilhalter zwei, einen halbkreisförmigen Querschnitt aufweisende Führungsstege 50, die beim Einsetzen des Bauteilhalters 40 mit dem Hall-Sensor 41 von den Rundungen 35 des Führungsbereich 33 der Ausnehmung 30 aufgenommen werden, der somit zur genauen Positionierung des Hall-Sensors 41 als Einführnut beziehungsweise Einfädelhilfe dient.

Der Hall-Sensor 41 hat eine im wesentlichen quaderförmige Gestalt und besitzt, wie in Figur 6, einer Schnittdarstellung des Bauteilhalters gemäß Figur 5, gezeigt ist, beispielsweise drei Anschlußbeinchen 42. Die Montage des Hall-Sensors 41 erfolgt in der Weise, daß zunächst der Bauteilhalter 40 auf der Schaltungsanordnung 17 mittels der Rasthaken 45 befestigt wird, um anschließend den Hall-Sensor 41 in eine im Bauteilhalter 40 vorgesehene Ausnehmung 51 einzubringen. Beim Einbringen des Hall-Sensors 41 in die Ausnehmung 51 gleitet wenigstens eines der Anschlußbeinchen 42 entlang einer von der Ausnehmung 51 ausgehender Einführschräge 53 des Bauteilhalters 40 zu einer Platinenöffnung 52 der Schaltungsanordnung 17 derart, daß ein ansonsten erforderliches Vorbiegen des Anschlußbeinchens 42 entfallen kann. Im nichtmontierten Zustand verlaufen die beispielsweise drei Anschlußbeinchen 42 parallel zueinander. Beim Einschieben des Hall-Sensors 41 in den Bauteilhalter 40 wird nun wenigstens eines der Anschlußbeinchen 42 mittels der Einführschräge 53 aus dieser Richtung herausgebogen und zu der zugehörigen Platinenöffnung 52 geführt. Die restlichen Anschlußbeinchen 42 treffen beim gezeigten Ausführungsbeispiel ohne Richtungsänderung zu ihren Platinenöffnungen 52 der Schaltungsanordnung 17. Im Endzustand des in die Ausnehmung 51 eingebrachten Hall-Sensors 41 liegt dieser an einem Anschlag 54 in der Ausnehmung 51 an, wobei die Anschlußbeinchen 42 an vorgesehenen Leiterbahnen der Schaltungsanordnung 17 herausragen, so daß sie beispielsweise verlötet werden können. Eine Herausfallen des Hall-Sensors 41 aus der Ausnehmung 51 des Bauteilhalters 40 wird durch zwei Bauteilrasthaken 55 verhindert, die im vollständig eingeführten Zustand des Hall-Sensors 41 den Hall-Sensor 41 in der Ausnehmung 51 verrasten. Die Bauteilrasthaken 55 sind hierzu entsprechend federelastisch ausgebildet.

## Patentansprüche

1. Verstellantrieb, insbesondere für ein Schiebedach eines Kraftfahrzeugs, mit einem Gehäuse (10), einem Elektromotor (3), einer Schaltungsanordnung (17) zur Steuerung des Elektromotors (3), die in einem separaten Gehäuseteil untergebracht ist, und einer Positionserfassungseinrichtung zur Bestimmung der Drehlage einer Antriebswelle (22) des Elektromotors (3), wobei die Positionserfassungseinrichtung aus einem Sensor (41) und einem an der Antriebswelle (22) des Elektromotors (3) angebrachten Magnetring (24) besteht, **dadurch gekennzeichnet, daß** der Sensor (41) mittels eines Bauteilhalters (40) an der Schaltungsanordnung (17) befestigt und an dem Bauteilhalter (40) zumindest ein Führungssteg (50) ausgebildet ist, der zur Positionierung des Sensors (41) in einen entsprechend korrespondierend ausgebildeten, den Führungssteg (50) umschließenden Bereich (33) einer im Gehäuse (10) vorgesehen Ausnehmung (30) eingreift.

2. Verstellantrieb nach Anspruch 1, **dadurch gekennzeichnet, daß** das die Ausnehmung (30) enthaltene Gehäuse (10) ein ein Untersetzungsgetriebe (5, 6) des Verstellantriebs (1) aufnehmendes Getriebegehäuse (10) ist.

3. Verstellantrieb nach Anspruch 1, **dadurch gekennzeichnet, daß** der Bauteilhalter (40) über eine Rastverbindung (45, 47) an der Schaltungsanordnung (17) befestigt ist.

4. Verstellantrieb nach Anspruch 3, **dadurch gekennzeichnet, daß** der Bauteilhalter (40) aus Kunststoff besteht.

5. Verstellantrieb nach Anspruch 1, **dadurch gekennzeichnet, daß** der Bauteilhalter (40) eine Ausnehmung (51) aufweist, in welcher der Sensor (41) zumindest teilweise aufgenommen ist.

6. Verstellantrieb nach Anspruch 5, **dadurch gekennzeichnet, daß** die Ausnehmung (51) des Bauteilhalters (4) zu zumindest einer Einführschräge (53) führt, entlang welcher wenigstens ein Anschlußbeinchen (42) des Sensors (41) beim Einfügen des Sensors (41) in eine Öffnung (52) der Schaltungsanordnung (17) gleiten kann.

7. Verstellantrieb nach Anspruch 1, **dadurch gekennzeichnet, daß** der Bauteilhalter (40) an seinem der Schaltungsanordnung (17) abgewandten Bereich über wenigstens einen Bauteilrasthaken (55) verfügt, welcher den Sensor (41) in einer im Bauteilhalter (40) vorgesehenen Ausnehmung (51) hält.

8. Verstellantrieb nach Anspruch 7, **dadurch gekennzeichnet, daß** der Bauteilrasthaken (55) federelastisch ausgebildet ist.

9. Verstellantrieb nach Anspruch 1, **dadurch gekennzeichnet, daß** der Sensor (41) als Hall-Sensor ausgebildet ist.

## Claims

1. Adjusting drive, in particular for a sliding roof of a motor vehicle, having a housing (10), an electric motor (3), a circuit arrangement (17) for controlling the electric motor (3), which arrangement is accommodated in a separate housing part, and a position-detecting device for determining the rotational position of a drive shaft (22) of the electric motor (3), the position-detecting device comprising a sensor (41) and a magnet ring (24) which is fixed on the drive shaft (22) of the electric motor (3), **characterized in that** the sensor (41) is fastened to the circuit arrangement (17) by means of a component holder (40), and at least one guide web (50) is formed on the component holder (40), the said guide web engaging, for the purpose of positioning the sensor (41), in an appropriately correspondingly designed region of (33) of a recess (30) provided in the housing (10), which region surrounds the guide web (50).

2. Adjusting drive according to Claim 1, **characterized in that** the housing (10) containing the recess (30) is a gear-mechanism housing (10) accommodating a step-down gear mechanism (5, 6) of the adjusting drive (1).

3. Adjusting drive according to Claim 1, **characterized in that** the component holder (40) is fastened to the circuit arrangement (17) via a latching connection (45, 47).

4. Adjusting drive according to Claim 3, **characterized in that** the component holder (40) consists of plastic.

5. Adjusting drive according to Claim 1, **characterized in that** the component holder (40) has a recess (51) in which the sensor (41) is at least partially accommodated.

6. Adjusting drive according to Claim 5, **characterized in that** the recess (51) of the component holder (40) leads to at least one introductory slope (53) along which at least one small connecting leg (42) of the sensor (41) can slide when the sensor (41) is fitted into an opening (52) of the circuit arrangement (17).

7. Adjusting drive according to Claim 1, **characterized in that** the component holder (40) has, on its region facing away from the circuit arrangement (17), at least one component latching hook (55) which retains the sensor (41) in a recess (51) provided in the component holder (40).

8. Adjusting drive according to Claim 7, **characterized in that** the component latching hook (55) is designed to be resilient.

9. Adjusting drive according to Claim 1, **characterized in that** the sensor (41) is designed as a Hall sensor.

## Revendications

1. Entraînement réglable, notamment pour un toit ouvrant d'un véhicule automobile, doté d'un boîtier (10), d'un moteur électrique (3), d'un circuit (17) placé dans une partie de boîtier séparée pour la commande du moteur électrique (3) et d'un dispositif de détection de la position permettant de déterminer la position de rotation d'un arbre d'entraînement (22) du moteur électrique (3), le dispositif de détection de la position se composant d'un capteur (41) et d'un anneau aimanté (24) placé sur l'arbre d'entraînement (22) du moteur électrique (3),
**caractérisé en ce que**
le capteur (41) est fixé au circuit (17) à l'aide d'un appui de composant (40) et sur l'appui de composant (40) est formée au moins une traverse de guidage (50), qui est en prise dans une zone (33), entourant la traverse de guidage (50) et conçue de manière correspondante, un évidement (30) étant prévu dans le boîtier (10) afin de positionner le capteur (41).

2. Entraînement réglable selon la revendication 1,
**caractérisé en ce que**
le boîtier (10) contenant l'évidement (30) est une boîte de vitesses (10) logeant un démultiplicateur (5, 6) de l'entraînement réglable (1).

3. Entraînement réglable selon la revendication 1,
**caractérisé en ce que**
l'appui de composant (40) est fixé au circuit (17) via une liaison par encliquetage (45, 47).

4. Entraînement réglable selon la revendication 3,
**caractérisé en ce que**
l'appui de composant (40) est en matière synthétique.

5. Entraînement réglable selon la revendication 1,
**caractérisé en ce que**
l'appui de composant (40) présente un évidement (51) dans lequel est logé au moins partiellement le capteur (41).

6. Entraînement réglable selon la revendication 5,
**caractérisé en ce que**
l'évidement (51) de l'appui de composant (4) conduit à au moins un biseau d'introduction (53) le long duquel peut coulisser au moins une petite bande de raccordement (42) du capteur (41) lors de l'introduction du capteur (41) dans une ouverture (52) du circuit (17).

7. Entraînement réglable selon la revendication 1,
**caractérisé en ce que**
l'appui de composant (40) est doté sur sa zone opposée au circuit (17) d'au moins un crochet à encliquetage de composant (55) qui maintient le capteur (41) dans un évidement (51) prévu dans l'appui de composant (40).

8. Entraînement réglable selon la revendication 7,
**caractérisé en ce que**
le crochet à encliquetage de composant (55) est conçu de manière élastique.

9. Entraînement réglable selon la revendication 1,
**caractérisé en ce que**
le capteur (41) est conçu en tant que capteur à effet Hall.
